# EUROPEAN PATENT APPLICATION

(11) **EP 4 502 281 A1**
(43) Date of publication of application: **05.02.2025**
(21) Application number: 23774374.5
(22) Date of filing: 23.02.2023
(51) Int. Cl.: E02F 9/00, E02F 9/16, B62D 25/08, B62D 25/10

(54) **CONSTRUCTION MACHINE**

(30) Priority: 25.03.2022 JP 2022049888
(71) Applicant: Hitachi Construction Machinery Tierra Co., Ltd., Koka-shi, Shiga 528-0061 (JP)
(72) Inventor: SUMINO, Tetsuya, Koka-shi, Shiga 528-0061 (JP); TANAKA, Tomoyuki, Koka-shi, Shiga 528-0061 (JP); HIGUCHI, Takashi, Koka-shi, Shiga 528-0061 (JP)
(74) Representative: MERH-IP Matias Erny Reichl Hoffmann Patentanwälte PartG mbB
(86) International application number: PCT/JP2023/006607
(87) International publication number: WO 2023/181775

(57) **Abstract**

A hydraulic excavator (1) includes a seat base (11) that is disposed between an operator's seat (10) and an upper surface part (9E) of a prime mover cover (9) for covering an engine (7) to be capable of opening and closing and fixes the operator's seat (10) on an upper side of the prime mover cover (9). In addition, a base plate (12) of the seat base (11) includes four screw holes (12F) as an operator' s seat fixing part attached to the operator's seat (10), and six bolt through holes (12D, 12E) as a prime mover cover fixing part attached to the prime mover cover (9). On top of this, the bolt through holes (12D, 12E) of the base plate (12) are arranged more widely than the screw holes (12F). In this case, the seat base (11) can be attached to the prime mover cover (9) prior to attaching the operator's seat (10).

## Description

### TECHNICAL FIELD

The present invention relates to a construction machine in which an operator's seat is disposed above a prime mover cover for covering a prime mover.

### BACKGROUND ART

A hydraulic excavator as a construction machine is configured of an automotive lower traveling structure, an upper revolving structure that is mounted on the lower traveling structure to be capable of revolving thereto, and a working mechanism rotatably disposed on the front side of the upper revolving structure.

Here, in an ultracompact hydraulic excavator called a mini excavator out of hydraulic excavators, an installation space of apparatus on the upper revolving structure is restricted to be small. The upper revolving structure in the ultracompact hydraulic excavator is provided with a revolving frame serving as a support structure, a prime mover of an engine or the like disposed on the backside of the revolving frame or the like, a prime mover cover for covering the prime mover in such a manner as to be capable of opening and closing, and an operator's seat that is disposed on an upper side of the prime mover cover and on which an operator sits (Patent Document 1).

Here, the prime mover cover is, for facilitating an opening and closing work and cutting down on costs, formed with a thin steel plate, for example. In addition, the operator's seat is attached on the prime mover cover by using a plurality of bolts, for example.

### PRIOR ART DOCUMENT

### PATENT DOCUMENT

Patent Document 1: Japanese Patent Laid-Open No. 2019-56219 A

### SUMMARY OF THE INVENTION

The hydraulic excavator according to Patent Document 1 is configured in such a manner as to attach the operator's seat on the prime mover cover by using the plurality of bolts. In this case, a load is added to a portion, to which the operator's seat is attached, of the prime mover cover by a weight of the operator's seat, an operator sitting on the operator's seat, and the like. The locations of the bolts for attaching the operator's seat on the prime mover cover are configured to concentrate on the surroundings of the operator's seat based upon a shape specification of the operator's seat in order that a screw tightening tool of a spanner or the like can reach each of the locations. Because of this configuration, the load results in concentrating on part of the prime mover cover, posing a problem that the prime mover cover is easy to deform.

The present invention is made in view of the above-mentioned problem of the conventional technology and an object of the present invention is to provide a construction machine that can prevent a load from concentrating on part of a prime mover cover to suppress deformation of the prime mover cover.

An aspect of the present invention is provided with a construction machine comprising: an automotive lower traveling structure; and an upper revolving structure disposed on the lower traveling structure to be capable of revolving thereto, wherein the upper revolving structure includes: a revolving frame serving as a support structure; a prime mover disposed on the backside of the revolving frame; a prime mover cover for covering the prime mover in such a manner as to be capable of opening and closing; and an operator's seat disposed on an upper side of the prime mover cover, characterized in that there is provided a seat base that is disposed between an upper surface part of the prime mover cover and the operator's seat to fix the operator's seat on the upper side of the prime mover cover, the seat base including: an operator's seat fixing part attached to the operator's seat; and a prime mover cover fixing part attached to the prime mover cover, wherein the prime mover cover fixing part of the seat base is located in a range wider than the operator' s seat fixing part.

According to the aspect of the present invention, the load can be prevented from concentrating on part of the prime mover cover to suppress the deformation of the prime mover cover.

### BRIEF DESCRIPTION OF THE DRAWINGS

Fig. 1 is a perspective view showing a hydraulic excavator according to an embodiment of the present invention.
Fig. 2 is a perspective view showing the hydraulic excavator in a state where a prime mover cover is open.
Fig. 3 is a right side view showing the hydraulic excavator with a working mechanism and a roll bar being removed.
Fig. 4 is a right side view showing the hydraulic excavator with an operator's seat being placed in a front position as similar to Fig. 3.
Fig. 5 is a right side view showing the hydraulic excavator with the operator's seat being placed in a last position as similar to Fig. 3.
Fig. 6 is a perspective view showing the hydraulic excavator in a state where a seat belt, a grease gun, and a cup holder are attached to a seat base.
Fig. 7 is a cross section showing the hydraulic excavator as viewed in a direction of arrows VII - VII in Fig. 3.
Fig. 8 is a perspective view showing a rear part of an upper revolving structure with the prime mover cover being open.
Fig. 9 is a perspective view showing the prime mover cover and the seat base in an exploded state thereof.
Fig. 10 is a perspective view showing the seat base.
Fig. 11 is a plan view showing the seat base.
Fig. 12 is a front view showing the seat base.

### MODE FOR CARRYING OUT THE INVENTION

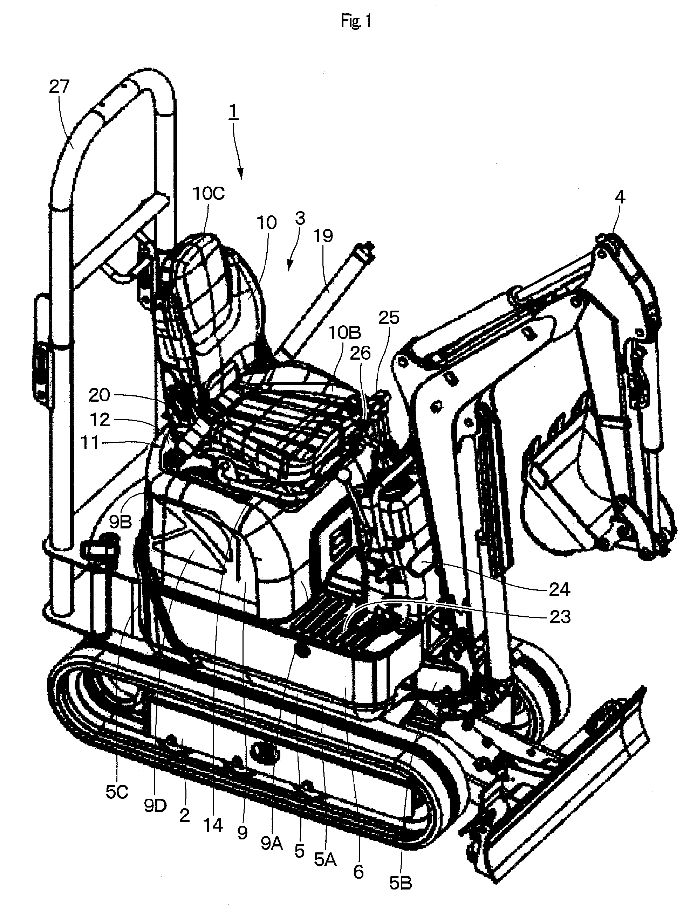

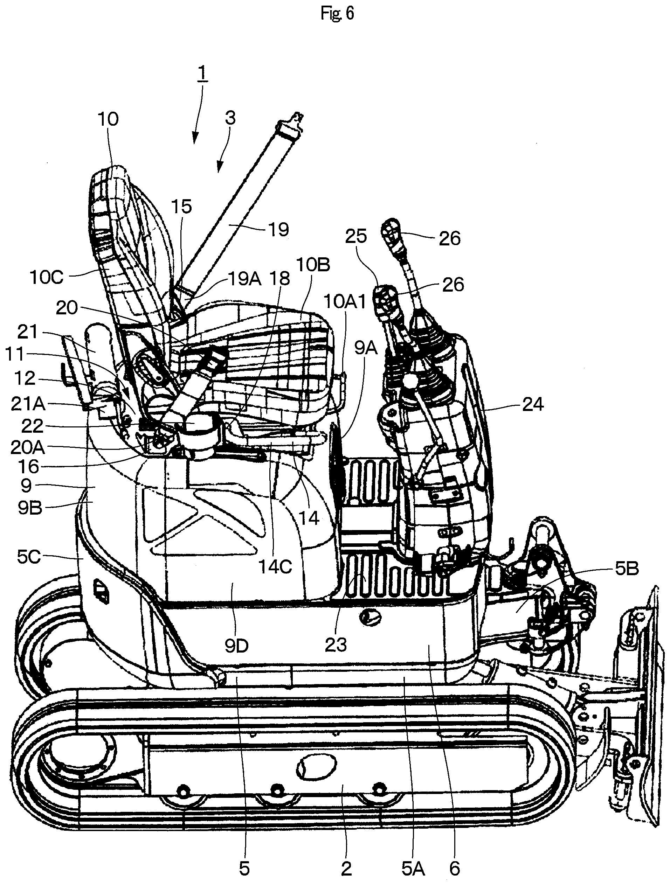

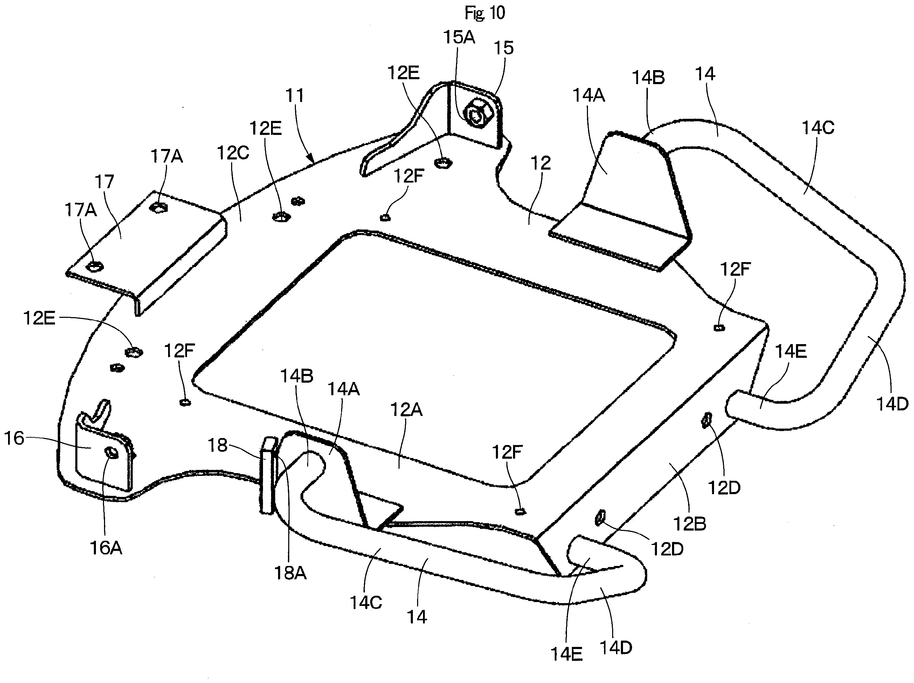

Hereinafter, an embodiment of a construction machine according to the present invention will be in detail explained referring to Fig. 1 to Fig. 12 by taking a case of being applied to a hydraulic excavator as an example.

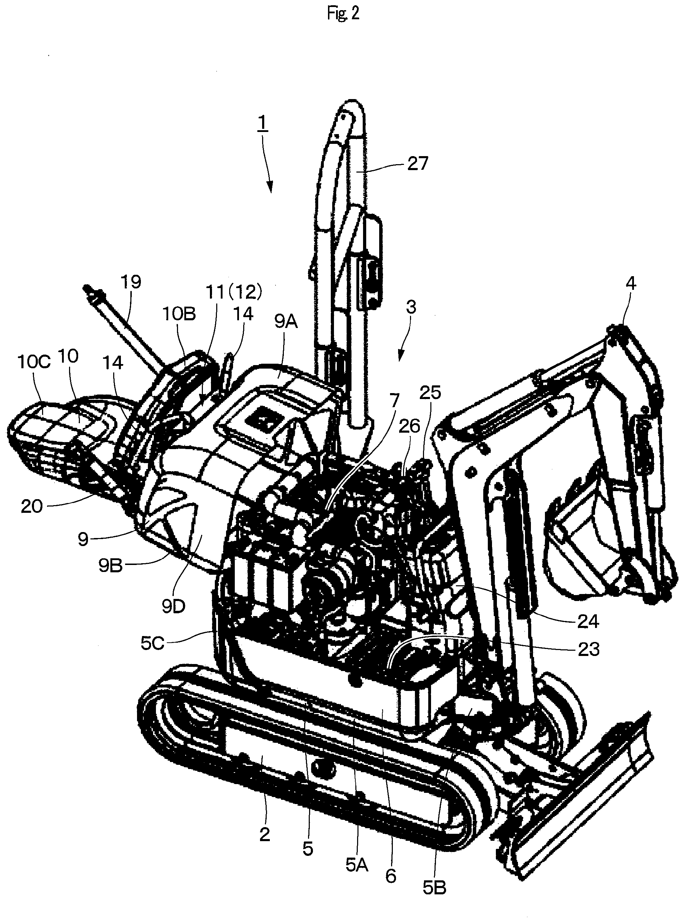

In Fig. 1 and Fig. 2, a hydraulic excavator 1 includes an automotive lower traveling structure 2 of a crawler type, an upper revolving structure 3 mounted on the lower traveling structure 2 to be capable of revolving thereto, and a swing type working mechanism 4 rotatably and pivotably disposed on the front side of the upper revolving structure 3. Here, the hydraulic excavator 1 according to the embodiment can be used for a demolition work inside a building and for an excavating work in a narrow place of an alley or the like, and is a model called a micromini excavator having a mechanical weight (total weight) of approximately one ton, for example.

The upper revolving structure 3 includes a revolving frame 5, an engine 7, a prime mover cover 9, an operator's seat 10, a seat base 11, seat belts 19, 20, a grease gun 21, and a cup holder 22.

The revolving frame 5 includes a bottom plate 5A composed of a metallic thick plate extending in a front-rear direction and formed in a rectangular shape, a support part 5B disposed on the front part of the bottom plate 5A to project forward, and a counterweight 5C that is disposed on the rear part of the bottom plate 5A and extends in a left-right direction and upward. The support part 5B supports the working mechanism 4 to be pivotable in the left-right direction.

The counterweight 5C is formed as a weight for making a weight balance to the working mechanism 4. A coupling member 9F of the after-mentioned prime mover cover 9 is attached to an upper surface of the counterweight 5C. With this configuration, the prime mover cover 9 can be supported via the coupling member 9F on the upper part of the counterweight 5C to be capable of opening and closing (rotatable). In addition, an after-mentioned roll bar 27 is attached to the backside of the revolving frame 5 (counterweight 5C).

A side surface cover 6 is disposed to surround the periphery of the bottom plate 5A of the revolving frame 5. The side surface cover 6 is disposed to rise upward with a height dimension equivalent to that of the counterweight 5C. In addition, the side surface cover 6 is formed to be bent in a U-letter shape in such a way that a rear side thereof opens.

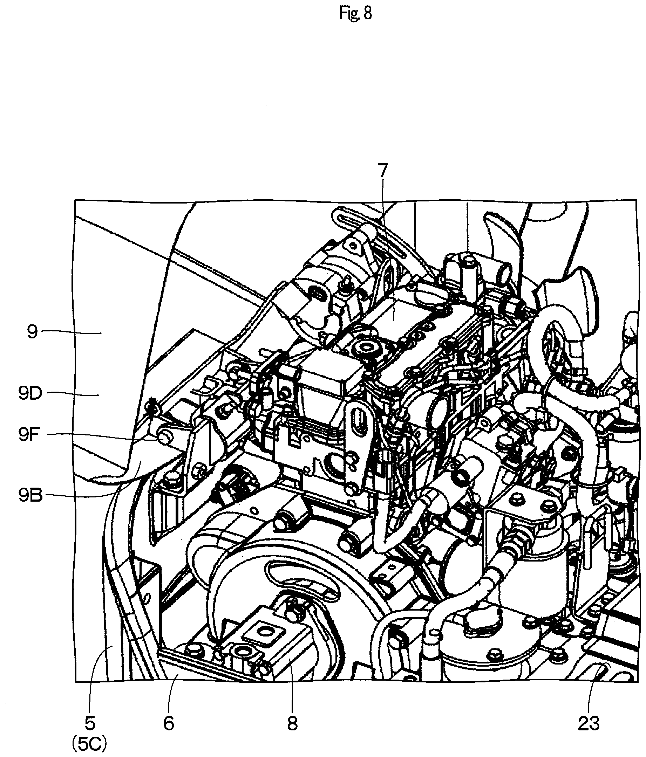

The engine 7 configures a prime mover and is disposed on the rear side of the revolving frame 5. The engine 7 is positioned in front of the counterweight 5C and is located in a transverse state of extending in the left-right direction. The engine 7 drives a hydraulic pump 8 (refer to Fig. 8). It should be noted that as to the prime mover, a hybrid type prime mover composed of an engine and an electric motor or an electric motor may be used.

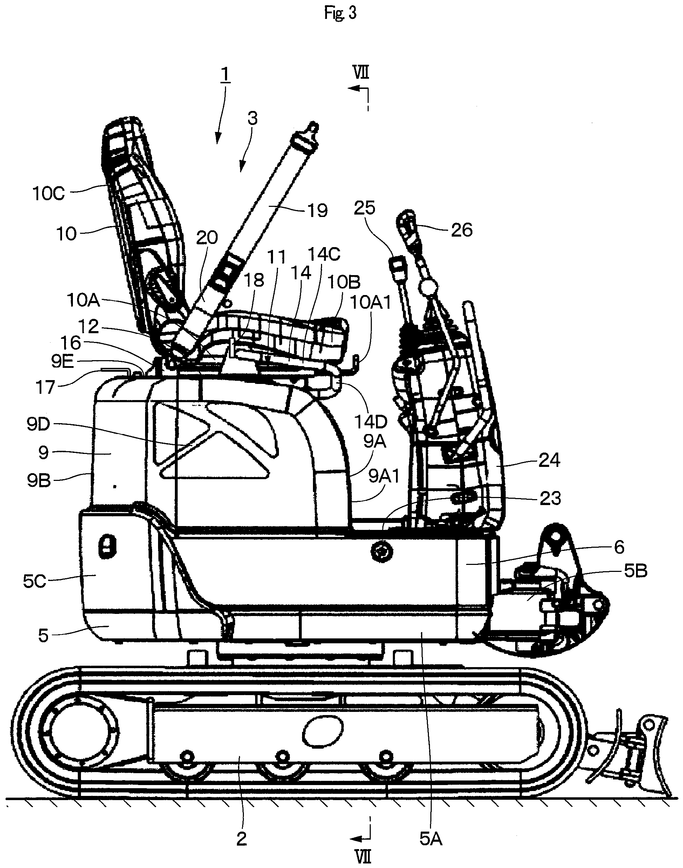

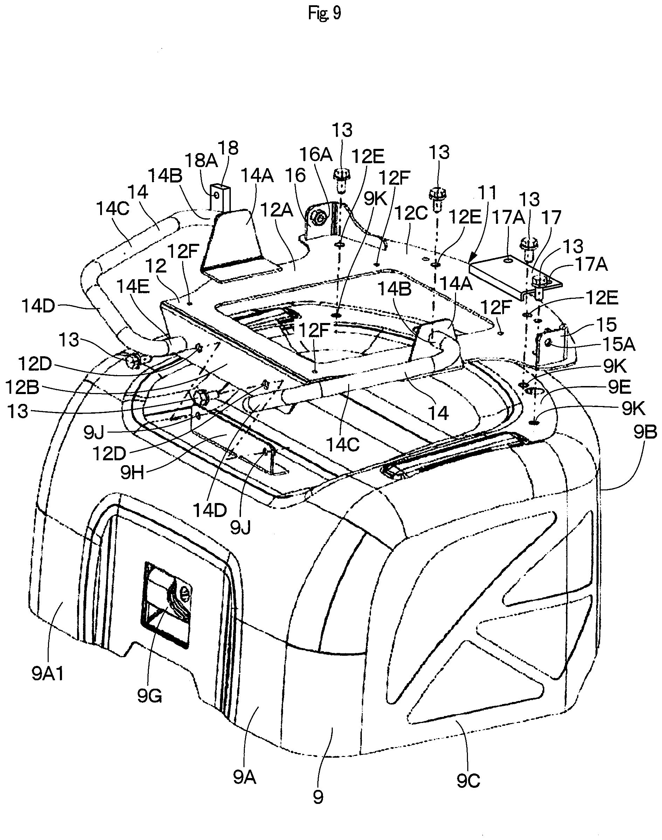

The prime mover cover 9 covers the engine 7 to be capable of opening and closing. The prime mover cover 9 is formed as an opening/closing cover in such a way that a front side thereof can open and close in the upper-lower direction with a rear side thereof as a fulcrum. As shown in Fig. 9, the prime mover cover 9 is formed in a boxy shape with the lower side being open by a front surface part 9A, a rear surface part 9B, a left surface part 9C, a right surface part 9D and an upper surface part 9E. As shown in Fig. 3, a lower portion of the front surface part 9A is configured as a front surface 9A1 extending vertically at the front part of the prime mover cover 9. In addition, the upper surface part 9E of the prime mover cover 9 is formed to be gradually bent and lowered forwardly.

As shown in Fig. 8, the coupling member 9F as a fulcrum at the opening and closing is disposed on a lower part of the rear surface part 9B. The prime mover cover 9 is rotatably attached via the coupling member 9F to the counterweight 5C. On the other hand, an opening/closing lever 9G is disposed to the front surface part 9A. The joint (lock) of the prime mover cover 9 to the structure on the revolving frame 5-side is released by operating the opening/closing lever 9G, thus making it possible to open the prime mover cover 9 (can be rotated upward).

As shown in Fig. 9, a bracket 9H extending in the left-right direction is disposed to rise upward on the front portion of the upper surface part 9E. A plurality of, for example, two screw holes 9J are arranged in the bracket 9H by intervals in the left-right direction. In addition, a plurality of, for example, four screw holes 9K are arranged in the rear portion of the upper surface part 9E by intervals in the left-right direction. Bolts 13 are screwed into the front screw holes 9J to attach the front part of the seat base 11. On the other hand, the bolts 13 are screwed into the rear screw holes 9K to attach the rear part of the seat base 11.

Here, the six screw holes 9J, 9K arranged on the upper surface part 9E are located in a wide range of the upper surface part 9E. On top of that, the six screw holes 9J, 9K are connected by the seat base 11 in a state where the seat base 11 is attached by using the bolts 13. Therefore, even when a load is applied to the single screw hole 9J or screw hole 9K, this load can be dispersed to the other five screw holes 9J, 9K. With this configuration, the prime mover cover 9 can be formed using an inexpensive, lightweight and thin steel plate or the like while maintaining the endurance (strength necessary for putting the operator's seat 10 thereon).

The operator's seat 10 is disposed on the upper side of the prime mover cover 9. In detail, the operator's seat 10 is attached via the seat base 11 on the upper surface part 9E of the prime mover cover 9. The operator's seat 10 is movable in the front-back direction in order that a seating position may be adjusted according to a body shape or an operation posture of an operator. The operator's seat 10 is provided with a slide mechanism 10A, a seat part 10B attached on the slide mechanism 10A, and a backrest 10C extending to the upper side from the rear portion of the seat part 10B.

The slide mechanism 10A can move a seating position of an operator, that is, positions of the seat part 10B and the backrest 10C in the front-back direction. The slide mechanism 10A is provided with a fixing part fixed to the seat base 11 (prime mover cover 9), a moving part disposed on the fixing part, a slide rail that is positioned between the fixing part and the moving part to move the moving part on the fixing part in the front-back direction, and a lever part 10A1 that is disposed on a front central part of the moving part to switch movement and fixation of the moving part. Therefore, since a weight of the operator's seat 10 is greater by the slide mechanism 10A, a load to be applied on an object for the operator's seat 10 to be attached to becomes large.

For example, as the lever part 10A1 of the slide mechanism 10A is pulled up upward, the seat part 10B (moving part) is allowed to move in the front-back direction. On the other hand, bringing down the lever part 10A1 to the lower side enables the movement of the seat part 10B (moving part) to be restricted to fix the seating position.

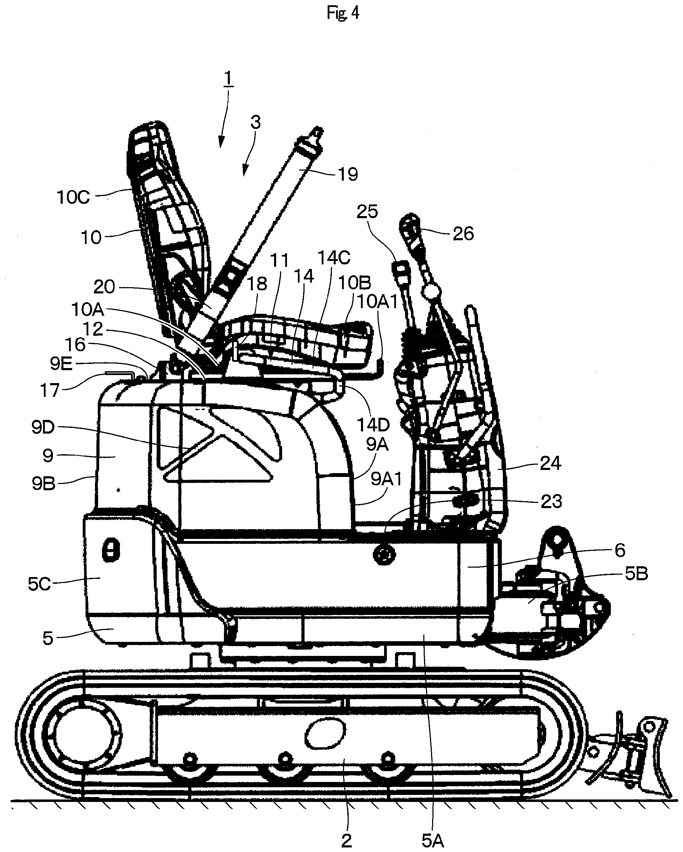

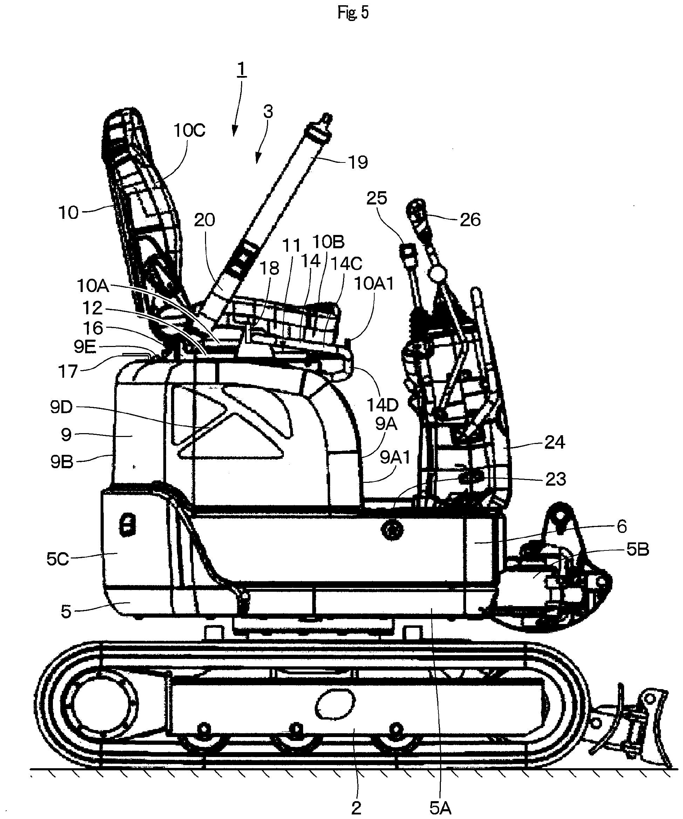

The operator's seat 10 is configured so that the lower fixing part of the slide mechanism 10A is placed on the upper surface of the seat base 11 and in this case, bolts inserted in bolt through holes in the fixing part (none of them is shown) are screwed into screw holes 12F arranged in a base plate 12 of the seat base 11. With this configuration, the operator's seat 10 is attached to the seat base 11 to be movable in the front-back direction (with the seating position being adjustable). Specifically the seat part 10B and the backrest 10C of the operator's seat 10 are movable and fixable to the front position by slide mechanism 10A as shown in Fig. 4, the last position as shown in Fig. 5 and the intermediate position (refer to Fig. 3) between the front position and the last position.

Next, an explanation will be made to the details of the configuration and effect of the seat base 11 that is a characteristic portion in the present embodiment.

The seat base 11 is disposed between the upper surface part 9E of the prime mover cover 9 and the operator's seat 10. In addition, the seat base 11 fixes the operator's seat 10 on the upper side of the prime mover cover 9. The seat base 11 is provided with the base plate 12, a grip 14, seat belt attaching portions 15, 16, a grease gun attaching portion 17 and a cup holder attaching portion 18.

As shown in Fig. 9 to Fig. 11, the base plate 12 is formed by an intermediate plate part 12A composed of a flat plate in a square frame shape, a front plate part 12B that is bent from a front end edge of the intermediate plate part 12A and extends to the lower side, and a rear plate part 12C that is positioned on the rear side of the intermediate plate part 12A and extends more largely in the left-right direction than the intermediate plate part 12A. Two bolt through holes 12D as a prime mover cover fixing part are formed on the front plate part 12B in positions corresponding to the two screw holes 9J arranged in the bracket 9H of the prime mover cover 9. In addition, four bolt through holes 12E as a prime mover cover fixing part are formed on the rear plate part 12C in positions corresponding to the four screw holes 9K arranged in the upper surface part 9E of the prime mover cover 9.

Further, the four screw holes 12F as the operator's seat fixing part are formed on the base plate 12 to be positioned closer to four corners of the intermediate plate part 12A. Bolts (none of them are shown) inserted in four bolt through holes arranged in the slide mechanism 10A of the operator's seat 10 are screwed into the four screw holes 12F.

In addition, as shown in Fig. 9, in a state where the base plate 12 is located on the upper surface part 9E of the prime mover cover 9, the bolt 13 is inserted in the front bolt through hole 12D from the front side and this bolt 13 is screwed into the screw hole 9J of the prime mover cover 9. In addition, the bolt 13 is inserted in the rear bolt through hole 12E from the upper side and this bolt 13 is screwed into the screw hole 9K of the prime mover cover 9. With this configuration, the seat base 11 can be attached to the upper surface part 9E of the prime mover cover 9.

Further, the operator's seat 10 (slide mechanism 10A) is placed on the base plate 12, and the bolts inserted in the four bolt through holes arranged in the fixing part of the slide mechanism 10A are screwed into the screw holes 12F. With this configuration, the operator's seat 10 (slide mechanism 10A) can be attached to the seat base 11.

Here, since the base plate 12 is disposed as a member different from the prime mover cover 9, the base plate 12 is formed to have a strength greater than a steel plate with which the prime mover cover 9 is formed, for example, a thicker plate thickness (a larger plate thickness dimension) or using a material of a high strength. On top of this, the base plate 12 is bolted to the upper surface part 9E of the prime mover cover 9 in the six bolt through holes 12D, 12E arranged to be dispersed in a wider range than the four screw holes 12F. As a result, even when the load from the operator's seat 10 or the load at the time the seat belts 19, 20 are pulled acts on one place of the base plate 12, the base plate 12 can transmit this load to the prime mover cover 9 in a state of being dispersed in the six places in the wide range. In addition, the base plate 12 is configured so that the bolts 13 for attachment of the front side are laterally directed (the shaft line is laterally directed) and are screwed from the front side. Therefore, the bolts 13 can easily be rotated without interruption of the operator's seat 10 to improve the workability of the removal work of the base plate 12.

The grips 14 are arranged in both left and right sides of the base plate 12 to be symmetrical in shape. As a result, it is possible to grip any one of the left and right grips 14, any choice of left or right being permitted, at the time of opening or closing the prime mover cover 9. The grips 14 are located closer to the front side than an intermediate position of the base plate 12 in the front-back direction. That is, the grips 14 are located in front of the prime mover cover 9 largely away from the rear coupling member 9F that is a fulcrum at the time of opening or closing the prime mover cover 9. With this configuration, at the time of opening or closing the prime mover cover 9 the grip 14 can be gripped in a position away from a rotational fulcrum to easily open and close the prime mover cover 9 with a small force. In addition, an operator can stabilize its body (posture) by gripping the grip 14 in a case of rolling at the traveling.

As shown in Fig. 3 to Fig. 5, the grips 14 are located in back of the front surface 9A1 of the front surface part 9A in the prime mover cover 9. As a result, the grips 14 are arranged not to inadvertently interfere with legs (calves and the like) of an operator sitting on the operator's seat 10.

The grip 14 includes a bracket 14A that is positioned closer to the outer in the left-right direction than the seat part 10B of the operator's seat 10 to project upward from the intermediate plate part 12A of the base plate 12, an outward bar 14B extending to the outer side in the left-right direction from the upper part of the bracket 14A, an outer grip part 14C that is bent from a tip end part (outer end part) of the outward bar 14B to extend to the front side, a front grip part 14D that is bent from a tip end part (front end part) of the outer grip part 14C to extend to the inner side and of which a tip end part reaches the front plate part 12B of the base plate 12, and an attaching bar 14E that is bent from a tip end part of the front grip part 14D to extend to the rear side and is attached to the front plate part 12B.

In addition, the outer grip part 14C is positioned outside the seat base 11 in the left-right direction to extend in the front-back direction. The outer grip part 14C is inclined to the lower side toward the front side along the upper surface part 9E of the prime mover cover 9. The outer grip part 14C is located to have a certain clearance from the prime mover cover 9 so that an operator may put its hand in between the outer grip part 14C and the upper surface part 9E even in a state of putting gloves on, for example.

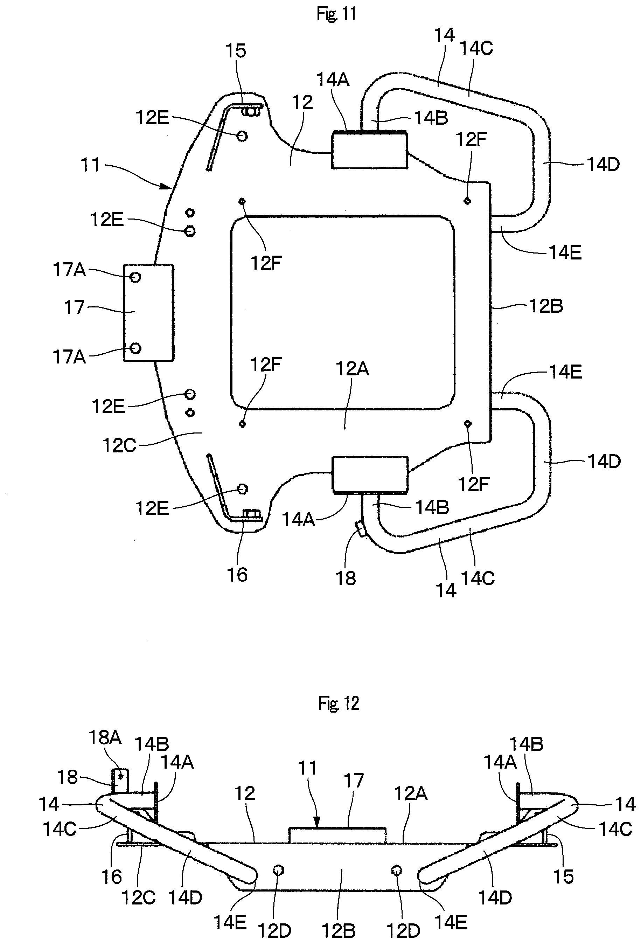

In addition, the outer grip part 14C is located in a position lower than a seat surface (upper surface) of the seat part 10B so that the outer grip part 14C may not interrupt the movement of the operator when the operator is about to sit on or stand up from the seat part 10B of the operator's seat 10. Further, as shown in Fig. 11 the outer grip part 14C is inclined to the inner side in the left-right direction toward the front side. As a result, the outer grip part 14C can control an extension dimension thereof in a front position close to the leg of the operator to be small. With this configuration, even in a state where the operator puts its leg in a position close to the prime mover cover 9 in a state where the operator is sitting on the operator's seat 10, the leg and the outer grip part 14C are configured in such a manner as not to interfere with each other.

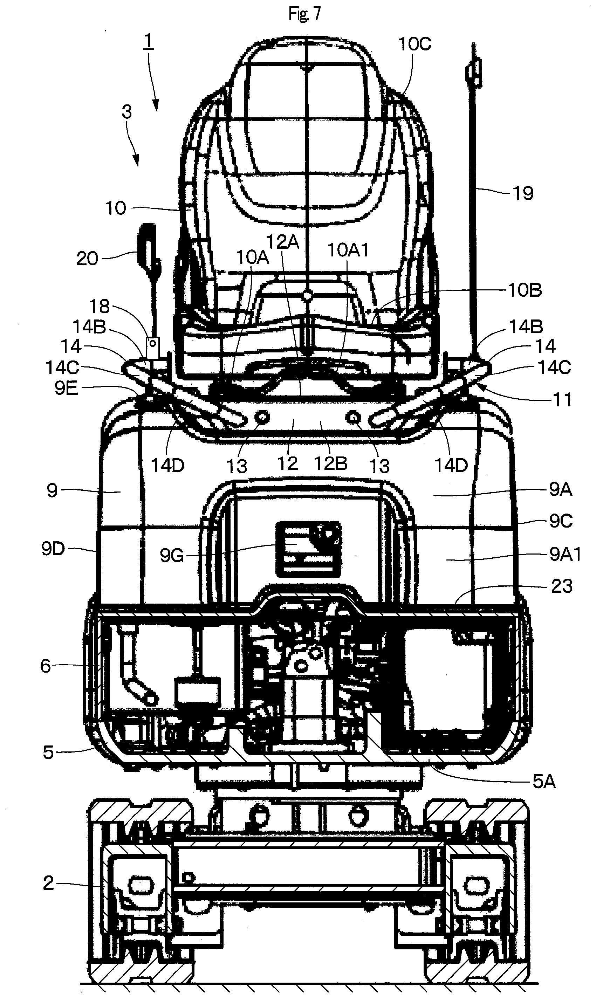

The front grip part 14D is positioned in front of the seat base 11 to extend in the left-right direction. In addition, as shown in Fig. 7 and Fig. 12, the front grip part 14D is inclined downward toward the inner side from the outer side in the left-right direction, whereby the front grip part 14D is located in a position lower than operator's seat 10 (the moving part, that is, the seat part 10B of the slide mechanism 10A) moved to the front side by the slide mechanism 10A. Therefore, even in a case where the operator's seat 10 is moved to the intermediate position as shown in Fig. 3 and the front position as shown in Fig. 4, the operator's seat 10 can be prevented from interfering with the front grip part 14D. Further, the left and right attaching bars 14E (tip ends of the front grip parts 14D) have a lever part 10A1 of the slide mechanism 10A therebetween to be positioned to be largely separated from each other. As a result, the left and right attaching bars 14E can prevent the interference with the lever part 10A1 of the slide mechanism 10A even in a case where the operator's seat 10 is moved to the intermediate position as shown in Fig. 3 and the front position as shown in Fig. 4.

Attaching portions are arranged in the seat base 11 to attach additional components thereto. Specifically, the seat belt attaching portions 15, 16 for attaching the after-mentioned seat belts 19, 20, the grease gun attaching portion 17 for attaching the grease gun 21, the cup holder attaching portion 18 for attaching the cup holder 22, and the like are arranged in the seat base 11.

The pair of seat belt attaching portions 15, 16 are arranged in both the left and right sides of the rear plate part 12C in the base plate 12. The seat belt attaching portions 15, 16 each are composed of a plate body bent in an L-letter shape and a lower end edge thereof is caused to adhere to the rear plate part 12C. In addition, screw holes 15A, 16A are respectively formed on attaching surfaces, which extend in the front-back direction, of the seat belt attaching portions 15, 16. A base part 19A of the left seat belt 19 is attached to the left seat belt attaching portion 15 by screwing a bolt inserted in the base part 19A into the screw hole 15A. On the other hand, a base part 20A of the right seat belt 20 is attached to the right seat belt attaching portion 16 by screwing a bolt inserted in the base part 20A into the screw hole 16A.

Here, according to a standard in Europe, it is necessary to install a seat belt in an ultracompact hydraulic excavator as well. In this case, the seat belt is generally attached to a component other than the operator's seat, for example, a prime mover cover. On top of this, according to the standard in Europe, an attaching strength of the seat belt needs to be a strength to the extent that even when the seat belt is pulled by a force of 15000N, the seat belt can withstand that force.

However, since the prime mover cover 9 according to the present embodiment is formed with a thin steel plate or the like, in a case where the seat belts 19, 20 are bolted directly to the prime mover cover 9, the stress concentrates on the bolted portion at one location, which cannot possibly withstand the force of 15000N.

On the other hand, the seat belt attaching portions 15, 16 are attached to the strengthened seat base 11, via which the seat belt attaching portions 15, 16 are attached to the prime mover cover 9. Therefore, loads acting on the seat belt attaching portions 15, 16 caused by the seat belts 19, 20 being pulled can be transmitted to the prime mover cover 9 in a state of being dispersed in a wide range via the seat base 11.

The grease gun attaching portion 17 is disposed on the rear part of the base plate 12. The grease gun attaching portion 17 has a horizontally extending attaching surface that is provided with a plurality of, for example, two screw holes 17A arranged by intervals in the left-right direction. A grease gun holder 21A (grease gun 21) is attached to the grease gun attaching portion 17 by screwing a bolt inserted in the grease gun holder 21A into the screw hole 17A.

The cup holder attaching portion 18 is disposed in the right grip 14. The cup holder attaching portion 18 adheres to a tip end side of the outward bar 14B to extend upward. As shown in Fig. 9, a screw hole 18A into which a bolt (not shown) for attaching the cup holder 22 is screwed is disposed on the upper side of the cup holder attaching portion 18.

The left seat belt 19 is attached to the left seat belt attaching portion 15. The left seat belt 19 is attached to the left seat belt attaching portion 15 by screwing a bolt inserted in the base part 19A into the screw hole 15A of the left seat belt attaching portion 15. In addition, the right seat belt 20 is attached to the right seat belt attaching portion 16. The right seat belt 20 is attached to the seat belt attaching portion 16 by screwing a bolt inserted in the base part 20A into the screw hole 16A of the seat belt attaching portion 16. When the left seat belt 19 and the right seat belt 20 are jointed around a stomach of an operator on the operator's seat 10, the operator can be fixed to the operator's seat 10.

The grease gun 21 is disposed on the rear side of the seat base 11. The grease gun 21 is a tool for filling an oil fill spot of the hydraulic excavator 1 with grease as a lubricant. The grease gun 21 is provided with the grease gun holder 21A. The grease gun holder 21A is located on the grease gun attaching portion 17. In this state, the grease gun holder 21A is attached to the grease gun attaching portion 17 by screwing the inserted bolt into the screw hole 17A.

The cup holder 22 is disposed in the right grip 14 of the seat base 11. The cup holder 22 is composed of a bottomed cylindrical body inside of which a vessel of a beverage can be accommodated. The cup holder 22 is attached to the cup holder attaching portion 18 by screwing a bolt inserted in the side part of the cup holder 22 into the screw hole 18A of the cup holder attaching portion 18.

A floor 23 is disposed to extend to the front side from the prime mover cover 9. A lever stand 24 is disposed to rise upward on the front part of the floor 23. A traveling control lever 25 and a working control lever 26 are arranged on the upper part of the lever stand 24.

As shown in Fig. 1, a roll bar 27 is attached on the rear side of the counterweight 5C of the revolving frame 5. The roll bar 27 is configured by an enforcing material in a reverse U-letter shape, extending to a position higher than an operator sitting on the operator's seat 10. With this configuration, when a structure drops down onto the hydraulic excavator 1 or the hydraulic excavator 1 turns over vertically, the roll bar 27 can protect the operator. In addition, as shown in Fig. 2, when the prime mover cover 9 is opened, the roll bar 27 can rotate in a horizontal direction for retreat to avoid the interruption.

The hydraulic excavator 1 according to the present embodiment has the configuration as described above, and hereinafter, an explanation will be made of the operation of the hydraulic excavator 1.

An operator boards on the floor 23 and sits on the operator's seat 10. At this time, the operator operates the lever part 10A1 of the slide mechanism 10A, thereby making it possible to move the position of the seat part 10B back and forth according to the operator's preference. When the operator's seat 10 is adjusted to the preference position, the operator joints the seat belt 19 and the seat belt 20.

When an operator sitting on the operator's seat 10 operates the traveling control lever 25 of the lever stand 24, it is possible to travel the lower traveling structure 2. On the other hand, when the operator operates the working control lever 26, it is possible to carry out an excavating operation of earth and sand or the like by revolving the upper revolving structure 3 and rotating the working mechanism 4.

In addition, in a case of performing maintenance for the engine 7 or the like, after moving the roll bar 27 in the horizontal direction, the lock is released by operating the opening/closing lever 9G and the prime mover cover 9 is lifted up by gripping the grip 14. At this time, since the grip 14 is away from the coupling member 9F as a rotating fulcrum of the prime mover cover 9, the prime mover cover 9 can simply be lifted up to open with a small force. In a state where the prime mover cover 9 is opened, the maintenance for the engine 7 or the like can be performed. When the maintenance for the engine 7 or the like is finished, the prime mover cover 9 is closed and the roll bar 27 is returned back to the original.

In this way, according to the present embodiment, there is provided the seat base 11 that is disposed between the upper surface part 9E of the prime mover cover 9 for covering the engine 7 to be capable of opening and closing and the operator's seat 10 to fix the operator's seat 10 on the upper side of the prime mover cover 9. In addition, the base plate 12 of the seat base 11 is provided with the four screw holes 12F that are attached to the operator's seat 10 and serve as an operator' s seat fixing part, and the six bolt through holes 12D, 12E that are attached to the prime mover cover 9 and serve as a prime mover cover fixing part. On top of this, the bolt through holes 12D, 12E in the base plate 12 are arranged in a range wider than the screw holes 12F. In other words, an area of surfaces of a polygon in which the six bolt through holes 12D, 12E as the prime mover cover fixing part are defined as vertexes is set to be larger than an area of surfaces of a polygon in which the four screw holes 12F as the operator's seat fixing part are defined as vertexes. In this case, the seat base 11 can be attached to the prime mover cover 9 prior to attaching the operator's seat 10. That is, in a state where the operator's seat 10 is attached, it is possible to set the attaching position (bolted position) of the seat base 11 to the prime mover cover 9 in a position that a screw tightening tool such as a spanner, a socket wrench or the like does not reach, specifically inside the seat belt attaching portions 15, 16.

Therefore, a plurality of attaching positions of the seat base 11 can be set throughout a wide range of the prime mover cover 9. With this configuration, the load acting on the seat base 11 from the operator's seat 10 can be dispersed to the plurality of attaching positions by the seat base 11. As a result, since the load can be prevented from concentrating on part of the prime mover cover 9, even in a case where the strength of the prime mover cover 9 is suppressed to be low, the deformation of the prime mover cover 9 can be suppressed.

In addition, in the present embodiment since the operator's seat 10 is provided with the slide mechanism 10A that causes the seating position to move in the front-back direction, the weight of the operator's seat 10 becomes heavier and a load to be applied to an attaching portion of the operator's seat 10 becomes further larger. Even in this case, in the attaching structure in which the seat base 11 is interposed between the prime mover cover 9 and the operator's seat 10, dispersing the load that will be applied to the prime mover cover 9 can prevent the deformation of the prime mover cover 9.

In addition thereto, in the configuration where the seat base 11 is located between the prime mover cover 9 and the operator's seat 10, even in a case where the specification of the operator's seat 10 is different, the attaching position of the seat base 11 to the prime mover cover 9 can be set. In this case, the attaching position of the seat base 11 to the upper surface part 9E of the prime mover cover 9 can be set to a position away from a deformable central part of the upper surface part 9E, that is, a position in the vicinity to a bending part of the prime mover cover 9 as a fulcrum (starting point of deformation) at the time a load is applied to the upper surface part 9E of the prime mover cover 9. Specifically, in a case where a load is applied near the bending part (ridge line part) between the upper surface part 9E of the prime mover cover 9 and the front surface part 9A, the rear surface part 9B, the left surface part 9C, or the right surface part 9D, a distance between an operating point and a fulcrum becomes short and a bending moment to the same load becomes small. With this configuration, since the screw holes 9J, 9K are arranged near the bending part in the prime mover cover 9, the prime mover cover 9 is difficult to deform, making it possible to further improve the durability to the load.

The grip 14 is disposed in the seat base 11 to open or close the prime mover cover 9. With this configuration, the prime mover cover 9 can easily be opened and closed by gripping the grip 14. In addition, even in a case where an operator shakes during the traveling, a body (posture) of the operator can be stabilized by gripping the grip 14.

Further, in the configuration where the grip 14 is disposed in the seat base 11, as compared to the configuration where a grip is disposed directly to the prime mover cover, since the load acting on the prime mover cover 9 is dispersed when the prime mover cover 9 is opened or closed by gripping the grip 14, the deformation of the prime mover cover 9 can be prevented.

The prime mover cover 9 is formed as an opening/closing cover of which a front side is capable of opening and closing in the upper-lower direction with a rear side thereof as a fulcrum. On top of this, the grip 14 is provided with an outer grip part 14C that is positioned outside the seat base 11 in the left-right direction to extend in the front-back direction, and a front grip part 14D that is positioned in front of the seat base 11 to extend in the left-right direction. With this configuration, the grip 14 can be gripped from any of the left and right sides of the hydraulic excavator 1. In addition, the grip 14 can be gripped from the front side as well.

The grip 14 is located closer to the rear side than the front surface 9A1 of the front surface part 9A in the prime mover cover 9. Therefore, the grip 14 can prevent a leg (calf or the like) of the operator sitting on the operator's seat 10 from inadvertently interfering therewith to improve the workability.

Further, the operator's seat 10 is provided with the slide mechanism 10A that can move the seating position in the front-back direction. On top of this, the front grip part 14D of the grip 14 is inclined downward from the outer side to the inner side in the left-right direction to be located in a position lower than the operator's seat 10 (the moving part, that is, the seat part 10B of the slide mechanism 10A) moved to the front side by the slide mechanism 10A. With this configuration, the front grip part 14D of the grip 14, even in a case where the operator's seat 10 is moved to the front side by the slide mechanism 10A, can avoid the interference with the operator's seat 10 (the moving part, that is, the seat part 10B of the slide mechanism 10A).

On the other hand, the seat belt attaching portions 15, 16, the grease gun attaching portion 17 and the cup holder attaching portion 18 are arranged in the seat base 11. With this configuration, the seat belts 19, 20 can be attached to the seat base 11 by utilizing the seat belt attaching portions 15, 16. The grease gun 21 can be attached by utilizing the grease gun attaching portion 17. The cup holder 22 can be attached by utilizing the cup holder attaching portion 18.

It should be noted that the embodiment is explained by taking as an example a case where the six bolts 13 are used to attach the seat base 11 on the upper surface part 9E of the prime mover cover 9 and the four bolts 13 are used to attach the slide mechanism 10A of the operator's seat 10 on the seat base 11. However, the present invention is not limited thereto, but two to five or seven or more bolts 13 may be used to attach the seat base 11 on the upper surface part 9E of the prime mover cover 9 and two, three, five or more bolts may be used to attach the slide mechanism 10A of the operator's seat 10 on the seat base 11.

In addition, the embodiment shows as an example a case where the attaching position of the seat base 11 to the upper surface part 9E of the prime mover cover 9 is set inside the seat belt attaching portions 15, 16 in the vicinity to the front surface part 9A, the rear surface part 9B, the left surface part 9C and the right surface part 9D. However, the present invention is not limited thereto, but for example, the attaching position of the seat base 11 to the upper surface part 9E of the prime mover cover 9 may be set under the operator's seat 10.

Further, the embodiment shows as an example a case where the rear part of the prime mover cover 9 is rotatably attached on the counterweight 5C of the revolving frame 5. However, the present invention is not limited thereto, but for example, a front part, a left part or a right part of the prime mover cover 9 may rotatably be attached to the vehicle body.

### DESCRIPTION OF REFERENCE NUMERALS

1: HYDRAULIC EXCAVATOR
2: LOWER TRAVELING STRUCTURE
3: UPPER REVOLVING STRUCTURE
5: REVOLVING FRAME
7: ENGINE (PRIME MOVER)
9: PRIME MOVER COVER
9A: FRONT SURFACE PART
9A1: FRONT SURFACE
9E: UPPER SURFACE PART
9F: COUPLING MEMBER (FULCRUM)
10: OPERATOR'S SEAT
10A: SLIDE MECHANISM
11: SEAT BASE
12: BASE PLATE
12D, 12E: BOLT THROUGH HOLE (PRIME MOVER COVER FIXING PART)
12F: SCREW HOLE (OPERATOR' S SEAT FIXING PART)
14: GRIP
14C: OUTER GRIP PART
14D: FRONT GRIP PART
15, 16: SEAT BELT ATTACHING PORTION (ATTACHING PORTION)
17: GREASE GUN ATTACHING PORTION (ATTACHING PORTION)
18: CUP HOLDER ATTACHING PORTION (ATTACHING PORTION)
19, 20: SEAT BELT (ADDITIONAL COMPONENT)
21: GREASE GUN (ADDITIONAL COMPONENT)
22: CUP HOLDER (ADDITIONAL COMPONENT)

## Claims

1. A construction machine comprising:
an automotive lower traveling structure; and
an upper revolving structure disposed on the lower traveling structure to be capable of revolving thereto, wherein the upper revolving structure includes:
a revolving frame serving as a support structure;
a prime mover disposed on the backside of the revolving frame;
a prime mover cover for covering the prime mover in such a manner as to be capable of opening and closing; and
an operator's seat disposed on an upper side of the prime mover cover, **characterized in that**
there is provided a seat base that is disposed between an upper surface part of the prime mover cover and the operator's seat to fix the operator's seat on the upper side of the prime mover cover, the seat base including:
an operator ' s seat fixing part attached to the operator's seat; and
a prime mover cover fixing part attached to the prime mover cover, wherein
the prime mover cover fixing part of the seat base is located in a range wider than the operator' s seat fixing part.

2. The construction machine according to claim 1, further comprising:
a grip disposed in the seat base to open or close the prime mover cover.

3. The construction machine according to claim 2, wherein
the prime mover cover is formed as an opening/closing cover of which a front side is capable of opening and closing in the upper-lower direction with a rear side thereof as a fulcrum, and
the grip includes:
an outer grip part that is positioned outside the seat base in the left-right direction to extend in the front-back direction; and
a front grip part that is positioned in front of the seat base to extend in the left-right direction.

4. The construction machine according to claim 3, wherein
the grip is located closer to the rear side than a front surface of the prime mover cover.

5. The construction machine according to claim 3, wherein
the operator's seat includes a slide mechanism that can move a seating position in the front-back direction, and
the front grip part of the grip is inclined downward from an outer side to an inner side in the left-right direction to be located in a position lower than the operator's seat moved to the front side by the slide mechanism.

6. The construction machine according to claim 1, wherein
the seat base is provided with an attaching part for attaching an additional component.
